# EUROPEAN PATENT APPLICATION

(11) **EP 3 246 860 A1**
(43) Date of publication of application: **22.11.2017**
(21) Application number: 16170717.9
(22) Date of filing: 20.05.2016
(51) Int. Cl.: G06Q 10/06, G06Q 50/02

(54) **SYSTEM FOR AGRICULTUR ANALYSIS AND RECOMMENDATION**

(30) Priority: 18.05.2016 GB 201608751
(71) Applicant: H L Hutchinson Limited, Wisbech, Cambridgeshire PE13 2RN (GB)
(72) Inventor: WOOD, Oliver, Pinchbeck, Spalding PE11 3SD (GB); WARD, Matt, Huntingdon Cambridgeshire PE29 2HR (GB); YOUNG, Mike, Grantham Lincolnshire NG31 7TW (GB); STRELCZUK, Nick, Lowick Northants NN14 3BG (GB)
(74) Representative: J A Kemp

(57) **Abstract**

The present invention provides an improved agricultural method for carrying out precision farming. The method provides an agricultural recommendation for a field. The agricultural recommendation is based on using characteristic information across the field. Representative values are determined based on the characteristic information. A grid is applied to an electronic representation of the field to break it down into smaller areas. The method includes determining an agricultural recommendation for the smaller areas based on representative values in that particular area. The present invention further provides an agricultural method for determining potential yield across a field, the method comprising the steps of generating an electronic representation of the field, receiving characteristic information relating to yield across the field, wherein the characteristic information relates to the yield for at least two different crop cycles (or harvests), partitioning the electronic representation of the field into a grid of cells, determining for each cell and for each crop cycle a representative value based on the characteristic information; and calculating a potential yield for each cell based on the representative values for each of the crop cycles for that cell.

## Description

The present invention relates to a method for providing an agricultural recommendation.

Agronomy is the science and technology of producing and using plants. Agronomists may supply advice to help cultivate crops on a particular plot. They may do so by advising on which crops to grow, the amount of seed which should be planted and also identify diseases and insects which may affect particular crops. It is well known that various products, e.g. pesticides, can be applied to help reduce or avoid weeds, diseases and insects. Agronomists may advise on which particular products, and in what amounts the products may be used, to help reduce or avoid diseases or insects harming the crops. Additionally, each year, or several times per year, the crop planted in a particular plot of land (e.g. a field) may be changed. It can be beneficial to change the type of crop being grown in a field and planting certain crops to follow on from the harvest of other crops and agronomy may be further used to indicate which crops to grow.

It can be difficult to determine the amount of seed which needs to be planted in a particular plot of land. Generally, a known target amount of crop is desired and a pre-determined amount may have been agreed for sale, e.g. to a supermarket. The target may be altered depending on a number of factors including the type of crop and the time of the year the crop is being planted. The number of seeds planted does not directly correspond to the amount of crop produced for various reasons, including disease, pests, failure to germinate, etc.. Therefore, enough seeds need to be planted to make sure that enough crop grows to reach the target amount of crop desired. Therefore, it is beneficial to use more seeds than may strictly be necessary. However, it is also preferable not to waste the seed, to avoid wasting resources and money, and to avoid over seeding a field. Therefore, ensuring that the right number of seeds are planted to obtain the target amount of crop is important. An agronomist may suggest an estimate for the amount of seed to plant to increase the likelihood that the target is reached. However, farming has tight margins and if the crop does not grow to provide the target amount, this can be damaging to the farm. Therefore, there is a need for providing a method with improved accuracy for determining the number of seeds to plant across the field to reach the target amount of crop being harvested.

Products can be used to enhance and protect the growth of crops. Products can be crop protection products, e.g. pesticide, herbicide and/or fungicide, or may be fertiliser products, e.g. known fertilisers and/or growth regulators. Although products may be useful, there is a general need to reduce the amount of products used on crops. For example, incorrect use of a crop protection product is expensive and may mean that weeds, diseases and/or pests may build up a tolerance to a crop protection product being used to control them meaning the crop protection product may have reduced effectiveness. Incorrect use of fertiliser products can lead to excess nutrients which can be detrimental and is wasteful and is environmentally damaging.

Additionally, common perception of the use of products, particularly crop protection products, on crops has generally worsened such that people often prefer reduced use of products on the food they intend to purchase and eat. There is also environmental pressure to reduce the number or amount of products used. This is evident in the development of buffer areas in which certain products may not be used, for example, within specific distances of a waterway, or (in some countries) within specific distances of a school.

Furthermore, products can be expensive. There is a clear economic benefit for reducing the amount of product needed for growing crops, and in particular, reducing the amount of product which is wasted. Any way of improving efficiencies of crop production and/or reducing costs can have a huge effect on the environmental sustainability and profit for an individual farm.

According to one aspect of the present invention there is provided an agricultural method for providing an agricultural recommendation for a field, the method comprising the steps of: generating an electronic representation of the field; receiving first characteristic information relating to a first characteristic across the field and second characteristic information relating to a second characteristic across the field; partitioning the electronic representation of the field into a grid of cells; determining for the first characteristic a first representative value based on the first characteristic information for each cell and for the second characteristic a second representative value based on the second characteristic information for each cell; and calculating a recommendation for each cell based on the first representative value and the second representative value for that cell.

The present invention provides a flexible and computationally efficient approach to determining a spatially uniform output (e.g. one representative value per cell) based on input data layers (i.e. the characteristic information) that may differ in the nature of the data provided, the density of data points and the form of representation of the data. For example, one data layer may comprise characteristic information for regions defined by polygons, another layer may define a characteristic as a continuous function and yet another layer may comprise regular or irregularly spaced data samples. Each data layer may correspond to characteristic information relating to one characteristic. As characteristic information relating to a range of layers (i.e. at least two characteristics) is received for each cell, this is used to determine the respective representative values which can be used for the recommendation. The present invention provides a method which utilises and cross calculates the data from these different layers to generate a recommendation despite these different data inputs. Known systems available to farmers may create recommendations based on only single layers of data, which very much limits the accuracy and therefore the environmental and financial value of the system to the business. The present invention cross computes between the data layers relating to different characteristics and comes up with a better recommendation by using multi-dimensional analysis. Thus the present invention provides a method with improved accuracy which can improve environmental impact and increase profit.

The first characteristic information and/or the second characteristic information may be quantitative or qualitative. As described above, the present invention utilises data in different forms. Thus, there is a benefit to using information/data which may be quantitative or qualitative because the user may select or use the appropriate or preferred form of the data to best capture the information relating to that characteristic. For example, one user may prefer to carry out analysis that results in qualitative results for a specific characteristic whereas another user may prefer to use a method that gives numerical values. Thus, using qualitative and quantitative characteristic information allows more freedom for the user to decide how the characteristic information is used to determine the recommendation.

The first representative value and/or the second representative value may be quantitative or qualitative. As described above, the present invention utilises data in different forms. Thus, there is a benefit to being able to use representative values which may be quantitative or qualitative because different types of representative value may be used to arrive at the recommendation. This allows the user to decide how the representative values are determined from the characteristic information and allows the user to control how these representative values are then used to determine the recommendation.

The first representative value and/or the second representative value in any one cell may be determined by analysing the characteristic information across that cell and calculating the respective representative value from the respective characteristic information applying to the highest proportion of the area of that cell. For example, one layer of characteristic information may be used at a time to determine the representative value for any one cell. Using the value with the highest proportion of the area of each cell will be more accurate rather than determining the average value for that cell.

The grid may be regular, preferably wherein the grid is formed such that the majority of the cells have a quadrilateral shape. Providing a regular grid may mean that it is easier to implement the recommendation at a later date when the user is in the field. Similarly, often in the field rows of crop will be grown. Providing a grid with quadrilateral shaped cells means that it makes it easier to align the grid with a route that the tractor may travel to plant rows of crop and/or apply product to rows of crop in accordance with the recommendation in different cells throughout the grid.

The agricultural method may further comprise the step of obtaining previous weather conditions of the field based on the field location, and optionally determining the expected rainfall over the field and/or expected amount of light on the field. Using local weather conditions may provide a more accurate recommendation as the weather will affect the growth of the crop.

The recommendation may comprise the number of seeds to plant in that cell, and/or the type of product to use in that cell, and/or the amount of product to use in that cell. As described above, using the method of the present invention to determine the number of seeds to plant can ensure that a target amount of crop is grown and harvested whilst minimising waste of seeds by avoiding planting too many seeds. Additionally, using the method to determine the type and/or amount of product to use on the crop can improve the chance of success of the crop whilst reducing the wastage of the product, which may be expensive.

The first characteristic and/or the second characteristic may be selected from the group consisting of subsoil texture, soil analysis, target yield, seed rate, slug pressure, weed pressure, seedbed condition, soil texture, yield map from previous crop, normalised difference vegetation index (NDVI) of current and/or any previous crop, green area of current and/or any previous crop, yield potential and/or nutrient requirements. Various different types of characteristic and combinations of characteristics may be used which is beneficial as the user can base the recommendation of characteristics which they believe to be more important and most indicative of a healthy crop. Additionally, certain users may only have access to certain types of analysis tools and therefore, may only be able to determine information for some characteristics and not others. Therefore, being able to select the characteristic from the list described allows different users to base the recommendation on different characteristics.

The agricultural method may comprise the step of sowing seeds based on the recommendation. As described above, carrying out this step based on the recommendation may increase the likelihood of growing the target crop whilst reducing waste.

The agricultural method may comprise the step of distributing product based on the recommendation. As described above, carrying out this step based on the recommendation may increase the likelihood of growing the target crop whilst reducing waste.

The agricultural method may further comprise the step of analysing at least one soil sample to determine at least one characteristic for at least one cell. This step allows the user to decide how accurately the analysis is carried out and to what extent to decide what characteristic information is used by the method. Furthermore, it allows the method of analysis to be chosen by the user, and possibly the form of the results of the analysis. For example, analysis may be carried out experimentally, e.g. in a laboratory, or the analysis could be carried out by hand, using the skill of the farmer, or by using an electronic sensor, e.g. in the field.

The agricultural method may further comprise the step of determining a nutrient content of the soil at least partly based on the previous crop planted in the field. The crop being grown may be greatly affected by the previous crop grown in the field, therefore taking this characteristic information into consideration may help provide an improved recommendation.

The agricultural method may comprise the step of receiving further characteristic information relating to the intended date for carrying out the recommendation and/or the type of seed. Providing this characteristic information may help provide an improved recommendation.

The agricultural method may comprise rendering the electronic representation of the field and the representative values and the first characteristic and/or the second characteristic. Rendering the representation and optionally the layers of data for different characteristics as described below allows the user to see the representative values and makes the characteristic information more accessible and easier to understand. Furthermore, it allows the user to more easily insert information, for example by inserting and adding characteristic information in layers and forming new layers with new data.

Calculating a recommendation may comprise obtaining a base value, obtaining a first modifier for the first characteristic based on the first representative value and a second modifier for the second characteristic based on the second representative value and applying the first modifier and the second modifier to the base value for each cell. The base value may be dependent on the date of carrying out the recommendation and/or the location of the field. The first modifier may be a change value and the second modifier may be a change value. The step of applying may comprise summing the first change value and the second change value. The step of applying further may comprise multiplying the base value by 1 plus the sum of the first change value and the second change value. This further clarifies how the recommendation can be calculated from the representative values. Calculating the recommendation in this way allows predetermined rules for obtaining the recommendation. It also means that the user may alter the representative values or the modifiers to affect the effect of different characteristic information on the recommendation output.

According to a further aspect of the present invention there is provided an agricultural method for determining potential yield across a field, the method comprising the steps of: generating an electronic representation of the field; receiving characteristic information relating to yield across the field, wherein the characteristic information relates to the yield for at least two different crop cycles (or harvests); partitioning the electronic representation of the field into a grid of cells; determining for each cell and for each crop cycle a representative value based on the characteristic information; and calculating a potential yield for each cell based on the representative values for each of the crop cycles for that cell. This allows a user to determine the potential yield of a crop across the field. This is useful in that it can be applied to various different crops no matter which crops have been planted before. Furthermore, information relating to previous different crops can be applied to determine the potential yield for a crop despite any differences in actual yield values.

The recommendation method described above may be used to provide a recommendation comprising characteristic information relating to yield across the field, and this characteristic information may be used for determining potential yield across a field as in the further method described. Alternatively, the potential yield calculated for each cell this further method may be used as characteristic information used to determine a representative value for each cell in the recommendation method described above.

According to a further aspect of the present invention there is provided a computer system comprising a processor and a memory containing instructions to perform the steps of the method described in relation to the present invention. Providing a computer system to carry out the method of providing an agricultural recommendation provides the same advantages as described for the method above and in the following description. The computer system may comprise a server comprising the processor and the memory. The server may be configured to communicate with an external device via a network. This allows the user to use an external device to carry out the method, however, the processing and storage can take place on a server such that the processing speed is not limited by the external device and storage on the external device does not have to be used.

The present invention will be described below with reference to examples and the accompanying Figures in which:
Fig. 1 depicts a representation of a field in accordance with the present invention;
Figs. 2 to 5 each depict a representation of a characteristic across the field in accordance with the present invention;
Fig. 6 depicts a representation of a combination of the characteristics depicted in Figs. 2 to 5;
Fig. 7 depicts the electronic representation of the field having been partitioned into a grid; and
Fig. 8 depicts exemplary systems used to carry out the method, comprising a tractor and a computing system.

In the Figures, like parts are identified by like reference numbers.

As described above, precision farming may be carried out, for example by altering the rate of dispersion of product onto a plot of land as a tractor is moved, or altering the number of seeds planted across the field. Historically, the rate is determined based on looking at one factor of the field, for example soil type. For example, different soil types may include silty loam, silty clay, clay, etc.. From determining the different soil types across the field, the rate of seed or product (e.g. growth regulator, pesticide, herbicide, fungicide or fertiliser) to apply over different parts of the field may be determined. There is a known benefit to considering more characteristic information when providing such a recommendation and calculating the recommendation in a more systematic way.

However, it can be difficult to provide characteristic information which can be used to instruct a tractor with a recommendation as it travels over a field. This is because the data for the characteristic information may be obtained via different methods and may be collected in different ways for different types of characteristic. This means that the data may be in different formats, may be of different types (e.g. quantitative and qualitative), have different ranges and effects and may apply to different parts of the field (e.g. some data may be continuous, whereas other data may be in the form of one or more discrete points).

The present invention provides an agricultural method for providing a recommendation for a field which allows different types etc. of data to be used. As will be described in further detail below, the agricultural method comprises the steps of generating an electronic representation of the field, receiving characteristic information relating to a first characteristic across the field and second characteristic information relating to a second characteristic across the field, partitioning the electronic representation of the field into a grid of cells, determining for the first characteristic a first representative value based on the first characteristic information for each cell and for the second characteristic a second representative value based on the second characteristic information for each cell, and calculating a recommendation for each cell based on the first representative value and the second representative value for that cell.

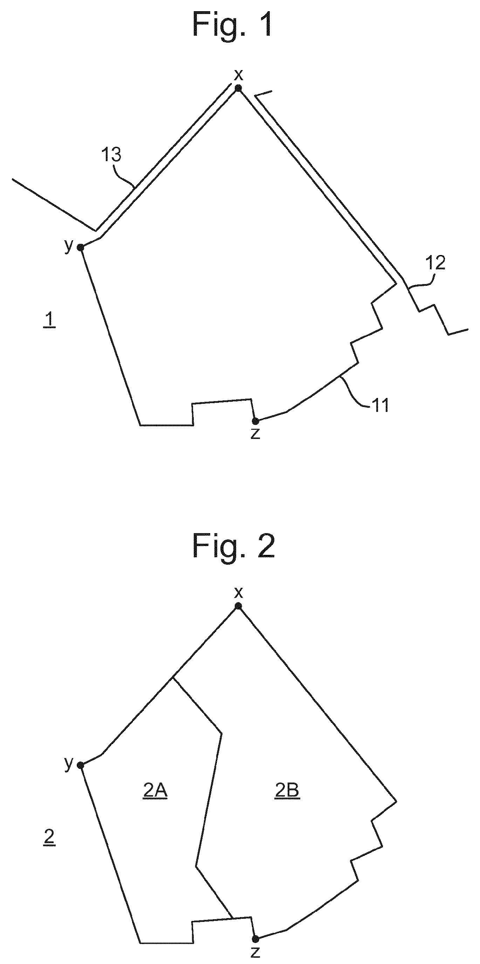

The field may be any plot of land. The field may be bound by hedges or fences, or may be discernible from another field by an identifiable gap in crops or by a change in the crops being grown. As an example, an electronic representation of a field 11 may be as depicted in Figure 1. As shown in Figure 1, further fields 12 and 13 may also be represented. Characteristic information relating to the further fields may be processed in the same way as information relating to the representation of field 11. However, for simplicity, in the description below, the method is only applied to the representation of field 11.

The method comprises the step of generating an electronic representation of the field 11, for example, the field may be represented on a base layer 1 as shown in Figure 1. The field may be represented by a perimeter as in Figure 1 indicating the outer boundary of the field. The base layer 1 may comprise an electronic map allowing the location of the field 11 to be identified and positioned on the base layer 1. The base layer 1 may comprise multiple layers relating to mapping information. As will be described in further detail, different information (e.g. characteristic information) may be provided on further layers.

Any mapping information system may be used to provide a map for the base layer 1, for example, the electronic map may comprise information from satellite imagery, aerial photography, Bing ™, Google Maps ™ or OpenStreetMap ™. The map may depict the area of and around the field, for example, from an aerial view and may optionally also show labels and relevant location names. Additionally, the map may comprise Ordnance Survey information which may also be shown on the base layer 1. The mapping information may be used as a geocoding system, for instance to locate towns on the map.

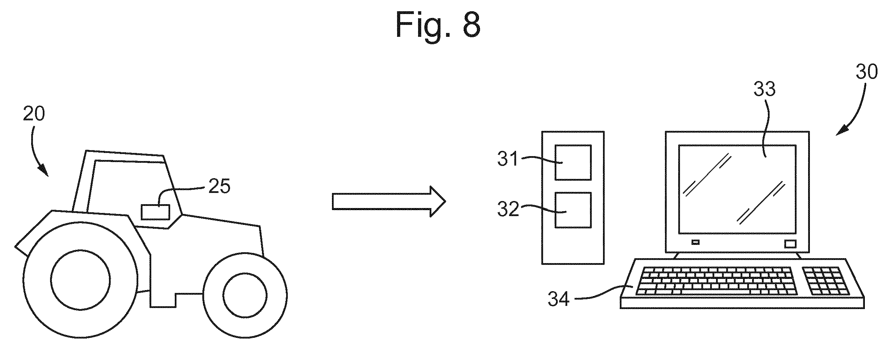

The location of the field 11 on the base layer 1 may be stored in a database. The database may be accessible by a computer, for example computer system 30 depicted in Figure 8. The location of the field 11 may be expressed in a coordinate reference system, for example EPSG:3857, which is used by Bing ™, Google Maps ™, and OpenStreepMap ™. The location of the field 11 on the base layer 1 may be given at least one specific reference point which can be used as a reference point by representations of the field on different layers to align the representation of the field 11 on different layers. For example, the representation of the field may have reference points X, Y and Z. These reference points may indicate specific, preferably easily identifiable, points on the field, such as particular corners of the field 11 which may be marked in reality in the field. The same, or at least one of the reference points X, Y and Z may be used on different layers representing different characteristics such that the layer can be aligned with other layers, or at least the base layer 1.

Aligning the representative values and/or characteristic information on different layers will avoid having to project or move data from other different layers to show it on the base layer 1. This is because it may be possible to view different layers superimposed on one another, i.e. further layers may be rendered over the base layer 1. The representative values and/or characteristic information relating to different layers may be stored in a database (being the same or a different database to the one mentioned above). Allowing the different layers to be located relative to base layer 1 comprising a known mapping information means that the information (e.g. representative values and/or characteristic information) can be exported and used by different systems and apps and it will still be possible to determine the location of the information (e.g. the representative values and/or characteristic information) on that layer, i.e. to determine to which field it relates.

As described above, characteristics may vary across the field. This is why farming the field whilst taking into consideration the variation of these characteristics as in the present invention may be beneficial as the recommendation at each specific point accounts for the characteristics at that specific location. The agricultural method further comprises receiving first characteristic information relating to a first characteristic across the field and second characteristic information relating to a second characteristic across the field. As will be described below, characteristic information relating to multiple characteristics (i.e. the first and second characteristics) are used to determine multiple representative values, i.e. at least a first representative value and a second representative value. Although only a first and second characteristic may be explicitly referred to, it is understood that this is interchangeable with multiple characteristics, and any suitable number of characteristics may be used for determining the recommendation. This also applies to the corresponding characteristic information and representative values. For example, the method may calculate the recommendation based on three, four, five, six, seven, eight, nine, ten or more characteristics. Thus, in the following description, the term "multiple" is used and is interchangeable with the "first and second" or more.

The characteristic information may be received in a variety of ways. The characteristic information may be received from user input, e.g. from the farmer. The characteristic information may be received from another data source, either automatically, or at the request of the user.

It will be understood that each characteristic may vary in different ways across the whole field. Thus, some characteristics may have substantially no variation, some characteristics may be substantially uniform for half the field and variable for the other half or any other combination of variation. The characteristic information may be qualitative or quantitative. This may depend on how the characteristic information is determined, e.g. by hand, or be experiment or analysis.

An exemplary way in which characteristic information relating to the characteristics is processed will now be described with reference to Figures 2 to 6. Figures 2 to 5 depict representations of the field 11 with different characteristics across the field 11. Although specific characteristics are used in this example, not all of the characteristics may be used in this combination. Additionally or alternative characteristics may be used in any combination.

Figure 2 depicts a first data layer 2. The first data layer 2 comprises characteristic information relating to a specific characteristic, in this case, the seedbed conditions across the field 11. The first data layer 2 may be called the "seedbed condition layer", or may be labelled depending on whatever characteristic it relates to. In this example, Figure 2 depicts the seedbed conditions. The seedbed conditions may be categorised. For example, the seedbed condition may be determined by a subjective assessment based on previous knowledge and experiences of the farmer. In the present example, category 2A may be "good" whereas category 2B may be "poor". This is an example of a qualitative characteristic. In the present invention, characteristic information relating to the seedbed condition across the field is received such that the characteristic across the field can be determined.

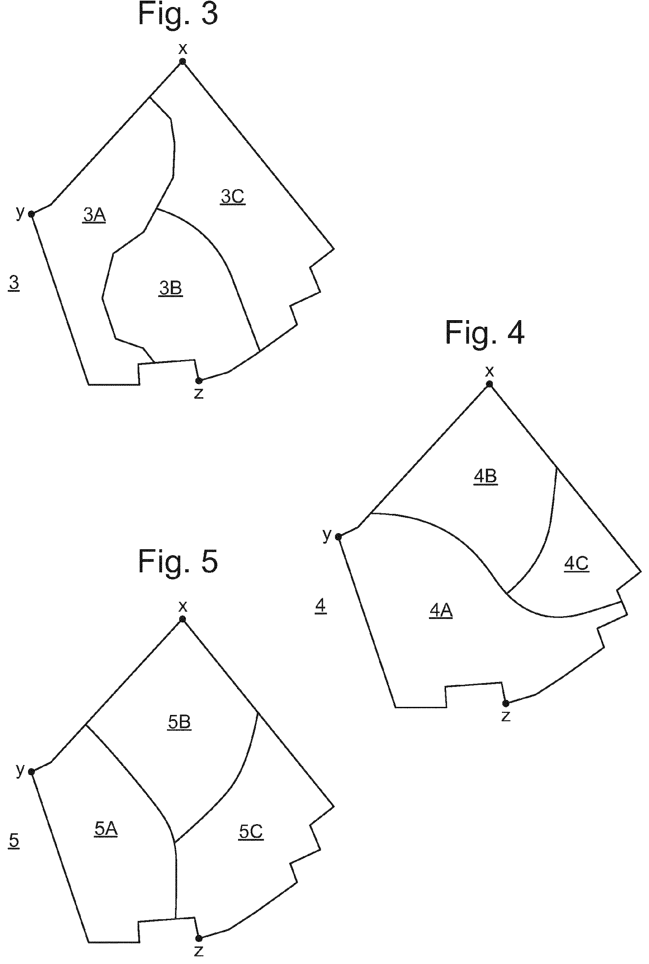

Figure 3 depicts a second data layer 3. The second data layer 3 comprises characteristic information relating to a specific characteristic, in this case, the soil type across the field 11. The soil type conditions may be categorised. In the present example, category 3A may be "silty loam", category 3B may be "silty clay" and category 3C may be "clay".

Figure 4 depicts a third data layer 4. The third data layer 4 comprises characteristic information relating to a specific characteristic, in this case, the slug pressure across the field 11. The slug pressure conditions may be categorised. In the present example, category 4A may be "high", category 4B may be "medium" and category 4C may be "low".

Figure 5 depicts a fourth data layer 5. The fourth data layer 5 comprises characteristic information relating to a specific characteristic, in this case, the weed pressure across the field 11. The weed pressure conditions may be categorised. In the present example, category 5A may be "medium", category 5B may be "low" and category 5C may be "very high".

Any reasonable number of data layers may be used. Each data layer described here may be labelled using descriptive terminology, i.e. to describe what data relates to that particular layer. It may also be possible to combine data relating to different characteristics on a single layer. Any desired category and number of categories may be used for any of the above characteristics. For example, although "good" and "poor" are provided as categories for the seedbed conditions, the categories may be entirely different, or may include a further category, such as "very good".

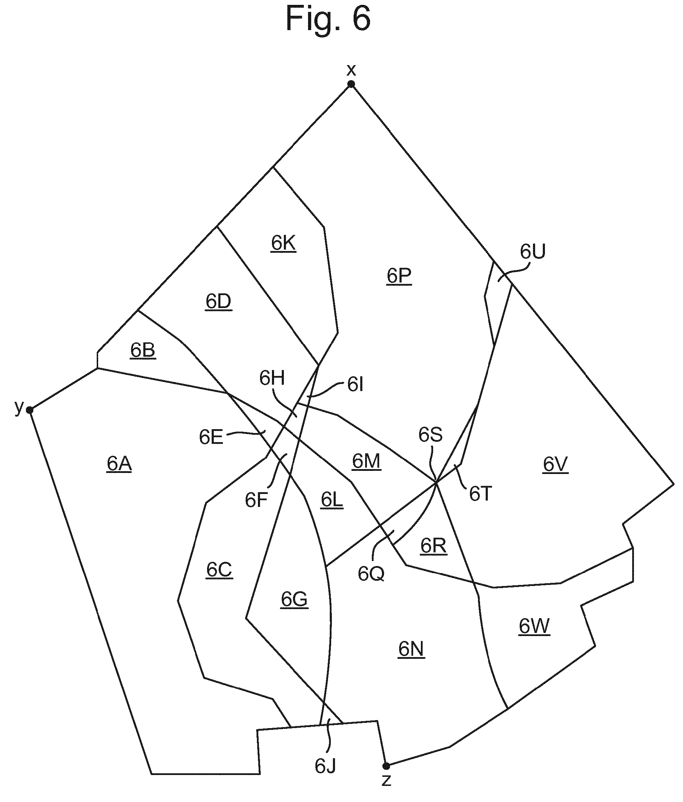

Figure 6 depicts a representation of the field 11 wherein the first to fourth data layers depicted in Figures 2 to 5 have been imposed on top of one another. Figure 6 shows the first data layer 2, the second data layer 3, the third data layer 4 and the fourth data layer 5 on top of one another and aligned. As can be seen, the combination of the data layers separate the field 11. Each different portion in Figure 6 indicates a portion of the field which has constant characteristics within that portion, but which has a different variation of characteristics to a neighbouring portion. The field 11 in Figure 6 is depicted as having different portions 6A to 6W, wherein each different portion represents a different combination of characteristics.

For example, portion 6A is in in category 2B, 3A, 4A and 5A, meaning that the seedbed conditions are "poor", the soil type is silty loam, the slug pressure is "high" and the weed pressure is "medium". As another example, portion 6R is in in category 2B, 3B, 4C and 5C, meaning that the seedbed conditions are "poor", the soil type is silty clay, the slug pressure is "low" and the weed pressure is "very high". As would be understood, the combination of different characteristics in each of portions 6A to 6R would mean that the growing of crops in each portion may have to be optimised separately. Thus, the recommendation for each portion 6A to 6R may be determined separately to provide an improved precision farming method as described below.

As is clear from the examples given in relation to the figures, the representative values used for particular characteristics may be qualitative. In other words, the representative values may be "good" or "poor", as described above with reference to Figure 2. Qualitative representative values may be derived from quantitative representative values, but may be a way of categorising specific ranges of values. Qualitative representative values may be determined based on a general assessment which does not result in a specific representative value. Alternatively, the representative values used may be quantitative. In other words, numerical representative values may be used. These may be discrete or continuous values, fractions or percentages.

It is beneficial that the characteristic information and the representative values can each be both qualitative and quantitative. This allows the way in which information is input to be chosen by the user by deciding how the characteristic information is input, either quantitatively or qualitatively. Furthermore, this also allows the way in which the representative value for each cell is determined, and is used to determine the recommendation. It will be understood that qualitative characteristic information can be used to determine a qualitative or quantitative representative value and quantitative characteristic information can be used to determine a qualitative or quantitative representative value.

For example, the pH value of the soil may be provided. The pH values of the soil may be determined to be within set ranges. In other words, the specific values may not be used as the representative values because this could lead to a large amount of variation over the field, instead values similar to each other could be considered to be in the same range. For example, possible pH ranges could be <5, 5.1 to 6, 6.1 to 7, 7.1 to 8 and >8. Alternatively, the range of pH values could be <6, 6 to 8 and >8. The ranges of the values may be selected by the user or may be predetermined. The user may be able to alter these ranges as desired. A representative value for each range may be selected. Having broader ranges will result in the field being broken up into fewer portions on that data layer.

It is understood that a mixture of qualitative and quantitative representative values may be used such that some characteristics may have qualitative representative values and some may have quantitative representative values, but the recommendation can be based on the combination of these representative values.

In any of the examples, the representative values of a characteristic may be converted into a pre-defined category. For example, values below a certain level may be in a given category with a representative value of "bad", whereas values above the certain level may be in a given category with a representative value of "good". Any variation of numbers of categories/representative values with different labels other than "bad" and "good" may be provided. Each category may have a pre-defined value associated with it for use when determining the representative value. Thus, the values of a specific category across a field may be converted to categorise the values into different groupings to determine the representative values. In this way there can be different numbers for different types of crop, but common categories (and common representative values) for different crops. I.e. the "good" category may have a different range of yield values when a first crop is being grown than when a second, different crop is being grown.

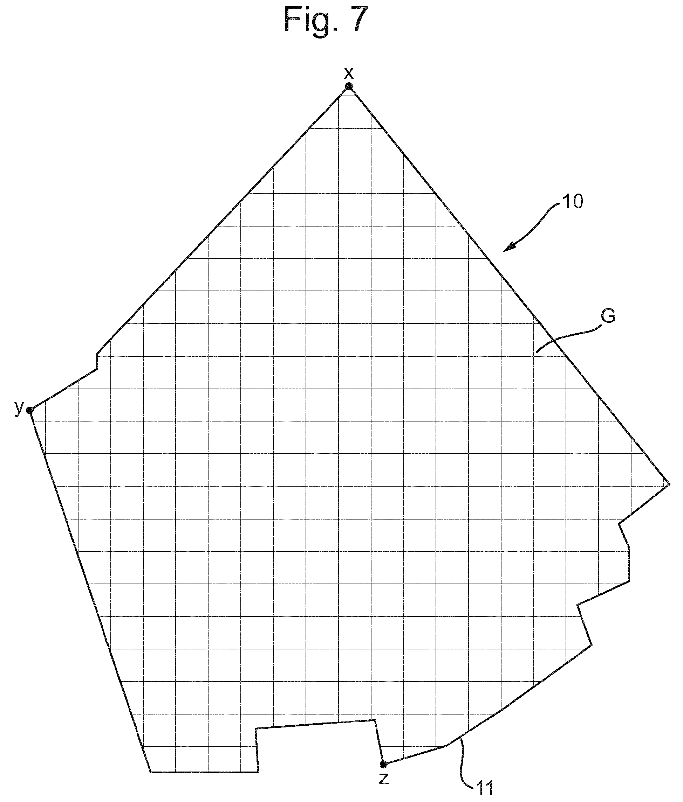

The method of the present invention further comprises the step of partitioning the electronic representation of the field 11 into a grid of cells. For example, a grid G is depicted in relation to the field 11 in Figure 7. The grid displayed in Figure 7 is supposed to be representative, however, as described below, the grid may be any shape and may be of varying sizes such that a different shape may be used and/or the grid G in Figure 7 may not be to scale. The grid is used to separate the representation of the field 11 into smaller areas. These smaller areas are referred to from hereon in as cells. As will be clear from the description above, the characteristics may vary across the field, and maybe even across each cell. Therefore, providing a grid as in the present invention allows smaller portions of the field 11 to be considered to allow more accurate precision farming. The grid G may be provided on a grid layer 10.

The grid may be any shape used to partition the representation of the field 11. It may be preferable that the grid is regular, i.e. that the shape of the majority of the cells is regular. In other words, the shape of the cells may be substantially the same as each other. This may make analysis of the cells easier and may make it easier to compare characteristics of different cells. The grid G could be formed to have cells of any shape, for example, the grid G may have triangular or quadrilateral shaped cells. Furthermore, it may be preferable for the grid G to be formed having cells which are rectangular or square. The cells are used to define areas over which the recommendation is constant. Thus, as farming machinery travels over any one cell, it may plant seeds at the same rate or disseminate products at the same rate. Thus, it may be beneficial to provide rectangular or square cells so that the grid with such regular (e.g. rectangular or square) cells may be more easily aligned with a route that the tractor may travel so that the machinery may be more efficiently controlled to carry out these actions across the cells of the field. It will be understood that this regularity may only apply to the majority of the cells because the edges of the field 11 may not be regularly shaped. Thus, at least all the cells not in contact with the edge of the electronic representation of the field may be regular, but at least some cells at the edge of the field may not be the same shape or size as the other regularly shaped cells throughout the rest of the grid G.

The grid G may be formed to have cells of any reasonable size. Providing a grid with relatively small cells requires higher levels of processing and may require a larger server than may otherwise be needed. However, providing a grid G with relatively large cells reduces the accuracy of the recommendation for each cell as the recommendation will not take into account the same extent of the variation of characteristics as it would otherwise. Thus, the grid size is a balance between processing power of the processor processing the characteristic information and determining the recommendation and providing accurate analysis of the field. For example only, the grid G may be formed such that the size of a cell corresponds to approximately 100 m² (e.g. 10 m by 10 m) in the real field. This could be smaller, for example, the area of each cell could be closer to approximately 50 m², 20 m² or 10 m² or smaller, however, it is likely that this will be limited by the precision at which the action relating to the recommendation can be carried out. For example, this may be limited by the precision at which the seed being planted in any one location can be sown, or the precision of the product being dispersed over the area relating to a single cell. Alternatively, the grid G may have cells which correspond to larger portions of the field, for example, the cell may correspond to a portion of the field which is 150 m², or 200 m², 500 m², or 1000 m² or bigger. The size of the cells formed by the grid G may be selected based on a balance between the accuracy to which the recommendation can be carried out in the corresponding cell and the accuracy required for particular plot, or by a particular farmer or for particular crop etc..

The grid G may be positioned relative to base layer 1. The grid G may be positioned such that an axis of the grid G is aligned with a north south axis in the base layer 1 and/or an axis of the grid G maybe aligned with an east/west axis in the base layer 1. If the grid 1 is formed of rectangular or square cells, the axis of the grid G may be aligned with both the north/south axis and the east/west axis in the base layer 1. However, orientation of grid G may be different or may be altered as desired. In other words, the orientation and location of the grid G could be moved relative to the base layer 1. Orientation and/or location of the grid G relative to the base layer 1 may be altered, for example to have better alignment along an edge of a field, or more particularly to match the path of a tractor (i.e. the movement of a tractor in a field). This could be beneficial because it may make it easier for the tractor to be navigated over the field whilst carrying out a recommendation.

The method comprises determining for each cell and for each characteristic a representative value based on the characteristic information. In other words, for the examples described in relation to Figures 2 to 5, the representative value of the characteristic in each cell may be established. For example as described, if the cell is located in portion 6A, it will have the characteristic information described above, i.e. the representation of the field in that cell will have "poor" seedbed conditions, the soil type will be silty loam, the slug pressure will be "high" and the weed pressure will be "medium". Alternatively, as described, if the cell is located in portion 6R, this means that the seedbed conditions are "poor", the soil type is silty clay, the slug pressure is "low" and the weed pressure is "very high".

In some cases, the representative value for a cell may be the same as the characteristic information. This may be the case if the characteristic information is constant across that cell, and the characteristic information is in the same format as is desired for the representative value. For example, as above, the characteristic information may be that the seedbed conditions are "poor" at a particular location. The representative value for that cell may also be "poor".

The characteristic in each cell may be relatively easily determined if there is no variation of the characteristic across that particular cell. In this case, the step of determining the representative value for that characteristic comprises obtaining the value/category for that characteristic for that cell. However, if there is variation of the characteristic across the cell, then some calculation may be required. For example, the cell may fall across two or more categories depicted in Figure 2, i.e. along the divide between the seedbed condition being "good" and "poor" in Figure 2. In this scenario, the representative value could theoretically be either "good" or "poor". Thus, the method may further comprise steps to determine the representative value for each cell for each characteristic. In this scenario, when there is variation across any one cell, the representative value in that cell may be determined by analysing the characteristic information across the cell.

In an example, a representative value may be determined from the characteristic information by determining the characteristic information applying to the highest proportion of the area of a cell and calculating the representative value based on that characteristic information. In other words, the method may determine that the dominant value of characteristic information in a cell is to be used to determine the representative value for a cell. For example, the characteristic information applying to the highest proportion of the area of the cell may be specified as the representative value for the cell. The representative value of a cell may be determined from calculating an average value, the mean or the mode of the characteristic information of the cell. For example, the mean value of the characteristic information may be used to calculate (or may even be used as) the representative value.

For each data layer, each cell may be configured to be allocated a single representative value for each characteristic (e.g. for the first characteristic and the second characteristic). If the characteristic information provided by the data layer is provided as singular points, the representative value for that cell which contains that point for that characteristic will be associated with the value of that singular point. In case the same cell contains multiple points, an average or dominant value may be used as described above to determine the representative value. If the characteristic information provided by the data layer are formed as polygons, then each cell that intersects with a polygon may be associated with the characteristic information provided by the layer for that polygon which may be used to determine the representative value for each cell.

Some cells may not comprise data belonging to a particular data layer, i.e. some cells may not have data for a particular characteristic in that particular area. In this case, the recommendation may be determined without using characteristic information relating to this layer. Alternatively, the method may comprise a step of estimating characteristic information for this characteristic (i.e. for this layer). If a layer provides no characteristic information for a cell that is located within the limits of the field, then the representative value for that cell may be interpolated from the values of the other cells in the field or from characteristic information elsewhere in the field, i.e. the method may comprise a step of estimating a characteristic value. This may be done by identifying the nearest location of data relating to that characteristic, e.g. by looking at representative values and/or characteristic information in other nearby cells in the same field or by looking at representative values and/or characteristic information relating to nearby fields if available. The representative values and/or characteristic information of nearby cells or fields may be interpolated for example by using an average of surrounding values of data at nearby locations, using a weighted average (e.g. an inverse distance weighing algorithm), by using some sort of algorithm such as a Kriging algorithm or by using the same representative value as a nearby representative value, e.g. using the same representative value as the closest representative value found. This allows for the method to interpolate data if required from other cells and/or fields if there is a lack of characteristic information for a particular cell.

The method comprises calculating a recommendation for each cell based on the representative values for each of the characteristics for that cell. Thus, the method comprises a step of determining a recommendation for each individual cell. The recommendation being based on the representative values of the characteristics for that cell means that the recommendation may be specific to the combination of particular characteristics of the field in that location. By using the representative values for each characteristic, the present invention uses multiple (i.e. at least first and second) characteristics for each cell and can therefore provide a more accurate recommendation than could otherwise be arrived at by using other known methods.

As the method determines the recommendation on the representative values of the different characteristics, the data from the different layers described above will be used for the calculation. Thus, multi-layered analysis is carried out by applying the multiple data layers described above to the same location to determine a recommendation for each cell. In doing so, each cell within the field can be associated with one distinct representative value for each of the characteristics, i.e. for each data layer. In other words, applying multiple layers and the grid G to the same base layer 1 enables associating characteristic information with each cell. The combination of representative values of all the characteristics in a cell may be referred to as a vector of representative values. Cells that have the same vector of representative values (i.e. which have the same combination of characteristics) may be grouped together to reduce the processing required to calculate the recommendation. Additionally, contiguous cells with the same vector of representative values, and thus the same recommendation may form coherent zones in the field, and the recommendation can be applied to larger portions of the field where possible.

Calculating a recommendation may comprise using an algorithm. The algorithm may be stored in a database (being the same or a different database to the one mentioned above). The representative values for each of the characteristics for that cell may be used as inputs to the algorithm, i.e. the representative values of characteristics determined above may be used by the algorithm. In this way, the representative value for each characteristic will be specific to each cell, and the calculation will be based on the representative values in that particular cell.

The algorithm may be a predetermined algorithm which determines recommendations depending on at least one, some or all the available information, i.e. the recommendation may not in fact be based on all of the available characteristics for any given cell. As such, the recommendation may only be based on selected data layers, rather than all the data layers containing characteristic information for that cell. The algorithm may be stored in a memory of a computer such that it is accessible for the calculation. The algorithm may be pre-determined or the algorithm may be altered by a user as desired. For example, the algorithm may be altered to take into account previously ignored characteristics, or to ignore previously included characteristics, or to alter the effect of a representative value of a characteristic on the overall recommendation, e.g. to make the representative value have more or less effect on the outcome of the recommendation. The algorithm may work by determining the representative values of the characteristics in the layered representative values in each cell and base a recommendation on these layers.

The algorithm may be for carrying out the steps of calculating a recommendation and may comprise obtaining a base value, obtaining a modifier for each characteristic based on the representative value and applying the modifiers to the base value for each cell. In other words, the algorithm may use the representative values to alter an initial base value to arrive at the recommendation. The base value may be a predetermined value or may be input by the user. The base value may be dependent on the date of carrying out the recommendation and/or the location of the field. The modifiers may be change values, meaning that they may indicate the amount of change to be made due to that specific modifier. For example, the modifiers may be a percentage. The step of applying may comprise summing the change values. For example, this may include summing the percentage values. The step of applying may further comprise multiplying the base value by 1 plus the sum of the change values. An example of this is described below with reference to Table 1.

**Table 1**

| **Sowing Date** | | **Default Target Plant Population** | **Slug Pressure** | | | **Weed Pressure** | | | | **Seedbed conditions** | | | **Soil Classification** | | | |
|---|---|---|---|---|---|---|---|---|---|---|---|---|---|---|---|---|
| **Start** | **End** | | **High** | **Medium** | **Low** | **Very High** | **High** | **Medium** | **Low** | **Poor** | **Acceptable** | **Good** | **Heavy** | **Silt** | **Light** | **Medium** |
| 01-Feb | 14-Feb | 450 | 20% | 15% | 10% | 50% | 45% | 40% | 40% | 20% | 10% | **-**10% | 50% | 20% | 10% | -5% |
| 15-Feb | 29-Feb | 425 | 20% | 12% | 0% | 40% | 35% | 15% | 5% | 20% | 10% | -10% | 40% | 10% | 10% | 0% |
| 01-Mar | 14-Mar | 425 | 15% | 10% | 10% | 20% | 10% | 10% | 5% | 20% | 10% | -10% | 30% | 20% | -5% | 5% |
| 15-Mar | 31-Mar | 350 | 15% | 15% | -10% | 10% | 0% | 0% | 0% | 20% | 10% | -10% | 15% | 25% | -5% | 0% |

The recommendation may be related to a number of different farming related applications, i.e. relating to farming the field. Farming the field may be any action relating to cultivating the field for the growth of a crop, e.g. treating the soil, or seeding/planting the crop, growing (including treating) the crop and/or harvesting the crop, etc..

The recommendation may comprise a day of "drilling", in other words, the recommendation may indicate the day on which the seeds may be planted/sown. The method may determine the amount of seed planted, i.e. the recommendation may comprise an indication of the number of seeds to plant in that cell and/or the type of product (e.g. fertiliser) to use in that cell and/or the amount of product to use in that cell. The types of machines used to carry out these recommendations are well know. For example only, the types of machine which may be used could include, but is not limited to, a sowing machine for planting seeds, a product spreader for distributing product (e.g. fertiliser), a tractor with attached sprayer for spraying products and a combine harvester for harvesting crop.

The user may input the desired date of carrying out the recommendation and/or may provide an indication of the preferred crop to be grown in the field 11. Thus, the method may comprise a step of receiving this further information. The method may use this characteristic information for determining the recommendation as described above. If the user inputs the desired date of carrying out the recommendation (which may be planting the seed), then the recommendation itself may be limited to this date and may not include the date of sowing the seeds in the recommendation. The modifiers may be different depending on the date of carrying out the recommendation. Alternatively, the modifiers may be the same as each other on different dates.

An example will be described in relation to Table 1, which is depicted above. Table 1 relates to an example for determining the amount of seed to plant across a field. In this example, the characteristics used for determining the recommendation are the slug pressure, weed pressure, seedbed conditions and soil classification. Each of these characteristics has different representative values. These include "high", "medium" and "low" for the slug pressure, "very high", "high", "medium" and "low" for the weed pressure, "poor", "acceptable" and "good" for the seedbed conditions and "heavy", "silt", "light" and "medium" for the soil classification. Thus, the recommendation in this example will be based on the representative value for each cell based on these characteristics in any one cell. As will be seen in table 1, different sowing dates are indicated in the first column. These dates can be used as dates to indicate when an action, for example, sowing, applying product or harvesting may be carried out across the whole field. Different dates are shown to indicate that different characteristics may affect the recommendation in different ways depending on the date. Generally, the same date or date range would be applied across the whole field, because an action, such as harvesting would be carried out across the whole field on the same day, or within a date range, i.e. within a range of a few days. The recommendation may alter depending on the date that the seeds are sown, thus, the user may input a desired range of dates or a specific date, and the recommendation can be determined for different dates or the specific date.

As shown, the table may indicate the target plant population. In Table 1, the default target plant population may be equivalent to the base value described above. This may be set by a default value as in the present example, or may be set by the user. The base value may vary depending on the date because it may be beneficial to grow different amounts of crop at different times of the year. In the present example, the recommendation may then determine the amount of crop to grow in each cell based on the representative values for the characteristics for each cell and the target plant population for that cell. For example, if considering a sowing date of 1 Feb to 14 Feb and a cell has "high" slug pressure, "very high" weed pressure, "good" seedbed conditions and "light" soil, the recommendation may be calculated to increase the target plant population by 20% for the "high" slug pressure, increase the target plant population by 50% for the "very high" weed pressure, reduce the target plant population by 10% for the "good" seedbed conditions and increase the target plant population by 10% for the "light" soil. These percentage values equate to the change values described above.

Based on the representative values in Table 1 for 1-14 Feb, the recommended number of seeds to plant in that cell may be 765. This is calculated as described above by multiplying the target plant population (the base value) by 1 plus the sum of the change values. Specific % values for each representative value and characteristic may be altered, additionally, the specific period and length of drilling may be altered. The skilled person would understand that the dates and values used in table 1 are exemplary only. They are supposed to give an indication of values that could be used, but entirely different values and ranges may be used instead. Thus the invention may be applied using a table of entirely different values which each vary in different ways from the values in table 1. The skilled person would understand that these values may be changed and altered, for example depending on experience and knowledge of how different characteristics affect the growth of the crop and the recommendation.

Furthermore, there may be alternative ways of determining the recommendation which does not include multiplying the base value by 1 plus the sum of the change values. For example, the percentages may be applied one after the other cumulatively (i.e. multiplying the base value by each of the change values consecutively) rather than applying each percentage to the initial base value and multiplying it as described above. Further, more complicated algorithms may also be used.

As will be understood, different algorithms may be applied such that these representative values are changed or altered. The representative values may be predetermined. However, it may be possible for the user to alter these representative values as desired to alter the effect of a particular characteristic. Furthermore, the example depicted in figure 2 may be applied to a specific crop, such as spring barley, however, the same concept could be applied to any crop, albeit with different representative values and possibly different characteristics.

In any of the above examples, a different crop may be used or selected to be grown by the user such that the recommendation may be provided in relation to the desired crop. Alternatively, the system may suggest a preferred crop depending on at least one characteristic of the field, for example, the previous crop grown in the field. Examples of crops comprise sugar beat, peas, beans and cereals, such as winter wheat, winter barley, spring wheat, spring barley. As an example, the system may suggest that sugar beet is followed by winter wheat.

Other crops include potatoes and cauliflowers, etc.. However, instead of determining the rate of planting as in some of the above examples, the distance between each of the potato plants for example may be determined by the agricultural recommendation system. The amount of product and/or liquid may still be determined in the same way as described above. In some instances, as for example for cauliflowers, there are not well known and used machines for planting these types of crop which have GPS for tracking the machine however, the same recommendation system could still theoretically be used if such a machine were available.

A different model/algorithm may be used for each different crop. Furthermore, a different model/algorithm may be used for different types or varieties of the same crop. For examples, different barley varieties may have different models. Therefore, the method can be applied to different crops not mentioned above.

The method may further comprise the step of carrying out the recommendation. For example the method may comprise the step of sowing/planting seeds based on the recommendation. Additionally or alternatively, the method may comprise the step of distributing product based on the recommendation. As such, the method may comprise varying any or all of these steps such that the step can be altered to match the recommendation for each individual cell. This might involve varying the rate of seeds being planted, and/or varying the rate of product being distributed.

Varying of the amount of product may involve increasing or decreasing the overall amount of liquid being disseminated by a tractor (for example, a tractor equipped in some manner with sprays for spraying the liquid over the field). For example, known tractors may have the capacity to carry 4,000 litres of liquid, or maybe even 6,000 - 10,000 litres. The product may be directly injected to the liquid before being dispersed over the plot of land. Therefore, in many tractors, the only way of controlling the amount of product supplied to the crop may be to vary the rate of liquid dispersed from the tractor at different locations of the field. However, it may also be possible to vary the amount of product by altering the ratio of the product in the liquid to provide the desired amount of product at any particular point.

The characteristic used for determining the agricultural recommendation may comprise at least one of subsoil texture, soil analysis, target yield, slug pressure, weed pressure, seedbed condition, the day of "drilling" (i.e. when the seeds are to be planted), water content of the soil, weather conditions of the field, pH of the soil, nitrogen content, phosphate content, potassium content, soil texture, NDVI of current and/or any previous crop, green area of current and/or any previous crop, yield potential and/or the previous crop intensity/yield. The general pH of the soil may be important because it can affect the availability of nutrients in the soil. Thus the availability of nutrients for the crop may change depending on the pH of the soil.

As will be clear, the characteristics may vary at different locations across a field, for example, there may be many different types of soil in only one field. Any or all of these characteristics may be used as part of the method for determining the agricultural recommendation.

The characteristics which are used may be a combination of characteristics inherent to the field, soil, field location, crop and/or any previously grown crop, or characteristics related to the use of the field input by the user. For example, subsoil texture, soil analysis, slug pressure, weed pressure, seedbed condition, at least one weather condition, water content of the soil, nitrogen content, phosphate content, potassium content, soil texture may be inherent from the type and condition of the soil. For example, NDVI of current crop and/or green area of the current crop may be inherent to the current crop, and/or NDVI of any previous crop, green area of any previous crop, and/or crop intensity of any previously grown crop may be inherent to the respective previously grown crop. The weather condition of the field may be inherent to the location of the field. The weather condition may take into account average hours of sunshine and/or average rainfall at a particular location at different times throughout the year. The target yield and/or the day of "drilling" (i.e. when the seeds are to be planted) may be set by the user, for example depending on the amount of crop needed or desired in the field and/or the preferred date of seeding the field respectively.

If the characteristic includes the previous yield of the field, this is an indication of the history of the field. The yield potential may relate to the predicted yield across the field. This characteristic information may be collected as the crop is harvested. For example, a harvester may determine the yield of crop at particular locations in the field as the crop is harvested, i.e. the harvester may measure yield when harvesting is carried out. A tractor 20 as depicted in Figure 8 may be used on the field and may determine characteristic information as it travels round the field. The tractor 20 may comprise a computing device 25 which includes a system, e.g. a GPS system, allowing the location of the tractor 20 to be determined. The tractor 20 may be replaced with any farming equipment used to travel over the field, for example, a harvester which may determine characteristic information about yield as the crop is harvested. The yield (which will be a value, e.g. 8 or 10 tonnes/hectare) may then be linked to the specific location in the field at which that amount of crop is harvested. This characteristic information may then be stored somewhere accessible, for example on the computing device 25, or on a network accessible by the user, or may be directly sent to the user's phone and or computing system, such as computing system 30 depicted in Figure 8, such that this characteristic information may later be used as a characteristic when determining the agricultural recommendation across the field.

Each data layer is a layer where each feature may provide one representative value for a data type that is specific to this layer. For instance, a data layer may be provided for any or all of the characteristics described above. In accordance with the characteristics described above, the data layers may include characteristic information relating to for example, soil types, yield, or biomass measurements as well as other information. In accordance with the invention, characteristic information relating to the characteristics may be received. More specifically, characteristic information for the data layers may be imported from files, hand-drawn, or calculated. The files that can be imported to create data layers may be obtained from agricultural machines that will have measured a specific parameter while on the field (for instance, such as the yield, or biomass). The measured characteristic information may be measurements taken at specific points in the field. Alternatively, the characteristic information may be input by the user using the electronic representation of the field to draw shapes on a data layer. For example, the user may draw polygons on a data layer as depicted in any of Figures 2 to 5, where each polygon relates to a single representative value for the characteristic in that layer. Alternatively, the characteristic information on a data layer may be calculated, for example by interpolating characteristic information as described above.

The method may further comprise the step of obtaining characteristic information relating to the characteristics. This may involve calculating characteristic information for the data layer. The characteristic information may be obtained in various ways. For example, this could include carrying out experiments of analysis to determine the characteristic at any particular location, e.g. the method could comprise the step of analysing at least one soil sample to determine at least one characteristic for at least one cell and/or determining a nutrient content of the soil at least partly based on the previous crop planted in the field and/or using ground scanners to measure and/or estimate the water content at a particular location.

Alternatively, the characteristic information may be obtained by requesting the characteristic information from an external source. For example, the method may comprise sending a request to a weather app or information source for weather related information based on the location of the field. The method may then further comprise determining average rainfall and/or expected amount of sunlight at that location throughout the year, and/or the expected rainfall over the field and/or expected amount of light on the field at a particular time/on a particular day. The weather information may be obtained by determining if there is available weather information for nearby fields which may also apply. Alternatively, the weather information may be obtained by collecting weather information available regarding a nearby town.

The data used in any of the above examples may be normalized. For example, the data may be normalized when it is received or imported from a file. The data may be normalized in order to minimize the number of distinct values which are retained and also to rule out abnormal values. The data can be normalized by applying selecting or applying a minimum and maximum value. Any value below the minimum may be reduced to 0 or set to the minimum value. Any value above the maximum may be reduced to the maximum value. The values may optionally also be rounded to a nearest selected multiple, for example to the closest multiple of 5. Then minimum, maximum, and rounding factor vary depending on layer type, and can generally be decided by the user. When the representative value is determined for each cell as described above, this may be based on normalized data.

The method may be at least partly computer implemented by a computer system. The computer system may comprise a processor and a memory containing instructions to perform the steps of the method described in relation to the present invention. For example, a computer system 30 as depicted in Figure 8 may be used to carry out at least the steps of generating an electronic representation of the field, receiving characteristic information as described above, partitioning the electronic representation of the field into a grid, determining a representative value for each cell and for each characteristic and calculating the recommendation. In Figure 8, the computer system 30 may comprise processor 31 and memory 32. The computer system 30 may also be comprise a display 33, for example a screen, and a user input 34, for example a keyboard. The computer system may be any appropriate device such as a laptop, tablet or phone which has a display 33 and a user input 34 (even if these are both combined on one screen, such as on a touch screen tablet or phone). The computer system 30 may be in communication with an external device such as a laptop, tablet or phone which may be used to send information from and to the user.

All of the base layer 1, the first data layer 2, the second data layer 3, the third data layer 4, the further data layer 5 and the gird layer 10 and any further similar layers of characteristic information not described are data layers. In other words, they may be layers of characteristic information stored in a computer, or more specifically a database. Each data layer may relate to specific information (e.g. specific characteristic information) as described above.

The method may further comprise rendering the electronic representation of the field as in Figure 1. Additionally, the method may further comprise rendering a representation of any or each of the data layers (i.e. the representative value for each cell for each characteristic across the field), as depicted in Figures 2 to 5. Each data layer may be capable of being separately and individually rendered by the computer on a computer screen. Similarly, any combination of these data layers may be rendered. The method may render each available data layer on top of one another, for example, the combination of the first data layer 2, the second data layer 3, the third data layer 4, the further data layer 5 and optionally the base layer 1 may result in the field 11 being rendered in a similar way to the field depicted in Figure 6. When multiple layers are rendered on top of one another, the transparency of each layer may be altered such that all the layers can be clearly seen. The transparency of the layers may be changeable by the user depending on the particular information they wish to view at any one time.

The computer system 30 may comprise one or multiple individual computers. Computers and/or computer systems 30 may communicate with each other via a network, for example the internet. The communication may be done wirelessly. The communication may be carried out using any appropriate media, such as email. The computer system may comprise a server comprising the processor and the memory, and the server may be configured to communicate with an external device via a network. Thus, the server may store information and communicate with an external device via a network. The server may allow the user to use an external device such as a desktop computer depicted in Figure 8, a laptop, tablet or phone to communicate with the network and/or server. In this way, the amount of processing carried out, and/or memory used for storage on the external device may be reduced as the processing/storage can take place on the server. Therefore, desktop computer depicted in Figure 8 may only be an external device, i.e. it may be a client side and there may be a corresponding server side. The server side (as part of the computer system 30) may be in communication with various different client side external devices. The steps described in relation to the above method may be carried out wholly on the client side, i.e. on the computer system 30 as in figure 8, or wholly on the server side, or the steps may be carried out by an external device used by the user in the field, similar to device 25, or different steps may be carried out on different computing devices, such as partially on a server and partially on an external device.

A further method may also be provided in accordance with the present invention. The further method may be carried out in the same way as described above for the above method except for the differences described below. The further method is for determining potential yield across a field, the method comprising the steps of generating an electronic representation of the field, receiving characteristic information relating to yield across the field, wherein the characteristic information relates to the yield for at least two different crop cycles, partitioning the electronic representation of the field into a grid of cells, determining for each cell and for each crop cycle a representative value based on the characteristic information; and calculating a potential yield for each cell based on the representative values for each of the crop cycles for that cell.

The further method is similar to the recommendation method above. Instead of being used to provide an agricultural recommendation for a field, the further method is used for determining potential yield across a field. The further method may receive characteristic information as described above, except that instead of receiving characteristic information relating to multiple (i.e. at least first and second) characteristics across the field, the further method may only receive information relating to yield across the field. However, in the further method, the characteristic information relates to the yield for at least two different crop cycles (or harvests). Thus, in the further method, although other characteristics may be referred to or used as described above, of particular importance is the yield related information. Furthermore, instead of calculating a recommendation as described above, a potential yield for each cell based on the representative values for each of the crop cycles for that cell is calculated. The potential yield is an indication of the yield which can be expected across different portions of the field no matter what crop is being planted.

The further method may be implemented using the computer system as described above.

The characteristic information and/or the representative values may be quantitative and/or qualitative as described above. In a specific embodiment, the characteristic information will be quantitative (or will be qualitative, but derived from quantitative data), and this will be used to determine a qualitative representative value. This may be particularly beneficial for the further method, because the information relates to different crop cycles, which means that the information may relate to different crops. Each crop cycle may include the sowing, cultivating and harvesting of a crop. As previously described, different crops may be grown in a field, for example, different crops may be grown within a rotation. The different crops will likely have different range of quantitative values. For example, if growing wheat, 6-12 tonnes per hectare of crop may be expected, with 10-12 tones being considered "good" and above 12 tones per hectare being considered "very good". Alternatively, for oilseed rape, 1.5-5 tonnes per hectare may be expected with 4-5 tonnes per hectare being "good", and more than 5 tonnes per hectare being "very good". Thus, the quantitative values are beneficially changed to qualitative values in order to compare and analyse the yield information relating to different crops.

The user, e.g. the farmer may determine the boundaries of the different qualitative values, i.e. what constitutes a "good" amount of crop for wheat, and what constitutes a "bad" amount of crop. Thus, the user may determine how the quantitative values are used to determine the qualitative values. For example, the user may decide that 10-12 tones is "good" as described above, or could instead decide that 9-11 tonnes is good and above 11 tonnes is "very good". Default values may be set for the ranges associated with the qualitative values. However, these may be set and altered by the user.

Each cell may be analysed to determine the potential yield. In the further method, the representative values may relate to the consistency as well as the quality of the yield. For example, the analysis may be used to determined which cells were "consistently good", "consistently average" and "consistently poor" and which were "inconsistently good" and "inconsistently poor". In this context, "inconsistently good" could mean that the yield in a particular cell is good more times than poor and "inconsistently poor" could mean that the yield in a cell is poor more times than good. In this context, consistently good may mean that the cell has a constant qualitative rating of "good". Different and/or additional representative values may be used.

Determining the potential yield may comprise the step of calculating an overall value from the representative values in any one cell. This may be simply done by determining the representative value with the highest mode. Alternatively, it may calculated by finding an average, or at least a balance between the representative values. For example, two "good" values and one "poor" value may result in an "inconsistently poor" value overall. The further method may further comprise calculating a quantitative crop specific potential yield depending on the representative values which have been determined. For example, if the representative values for a cell are all "consistently good", the potential yield may be calculated by determining the associated range of quantitative values which are "consistently good" for a particular crop. For example, if the potential yield is "consistently good" in a cell, this could mean that for oilseed rape, approximately 4-5 tonnes/per hectare may be the potential yield in that cell. Alternatively, if wheat is considered, this may mean that approximately 10-12 tonnes per hectare would be the potential yield in that cell.

The characteristic information described above in relation to the recommendation method may be used to further enhance the further method. Furthermore, the output of the recommendation method may relate to a predicted yield based on the characteristics described above, and this may be used as an input to the further method. Alternatively, the potential yield calculated in the present method may be used as an input in the recommendation method.

When introducing elements or features of the present disclosure and the exemplary embodiments, the articles "a", "an", "the" and "said" are intended to mean that there are one or more of such elements or features. The terms "comprising", "including" and "having" are intended to be inclusive and mean that there may be additional elements or features other than those specifically noted. It is further to be understood that the method steps, processes, and operations described herein are not to be construed as necessarily requiring their performance in the particular order discussed or illustrated, unless specifically identified as an order of performance. It is also to be understood that additional or alternative steps may be employed.

It is specifically intended that the present invention not be limited to the embodiments and illustrations contained herein and the claims should be understood to include modified forms of those embodiments including portions of the embodiments and combinations of elements of different embodiments as come within the scope of the following claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

**1.** An agricultural method for providing an agricultural recommendation for a field, the method comprising the steps of:
generating an electronic representation of the field;
receiving first characteristic information relating to a first characteristic across the field and second characteristic information relating to a second characteristic across the field;
partitioning the electronic representation of the field into a grid of cells;
determining for the first characteristic a first representative value based on the first characteristic information for each cell and for the second characteristic a second representative value based on the second characteristic information for each cell; and
calculating a recommendation for each cell based on the first representative value and the second representative value for that cell.

**2.** The agricultural method claim 1, wherein the first characteristic information and/or the second characteristic information may be quantitative or qualitative.

**3.** The agricultural method of either of claims 1 or 2, wherein the first representative value and/or the second representative value may quantitative or qualitative.

**4.** The agricultural method of any one of the preceding claims, wherein the first representative value and/or the second representative value in any one cell is determined by analysing the respective characteristic information across that cell, and calculating the respective representative value from the respective characteristic information applying to the highest proportion of the area of that cell.

**5.** The agricultural method of any one of the preceding claims, wherein the grid is regular, preferably wherein the grid is formed such that the majority of the cells have a quadrilateral shape.

**6.** The agricultural method of any one of the preceding claims, further comprising the step of obtaining previous weather conditions of the field based on the field location, and optionally determining the expected rainfall over the field and/or expected amount of light on the field.

**7.** The agricultural method of any one of the preceding claims, wherein the recommendation comprises the number of seeds to plant in that cell, and/or the type of product to use in that cell, and/or the amount of product to use in that cell.

**8.** The agricultural method of any one of the preceding claims, wherein the first characteristic and/or the second characteristic is selected from the group consisting of subsoil texture, soil analysis, target yield, seed rate, slug pressure, weed pressure, seedbed condition, soil texture, yield map from previous crop, normalised difference vegetation index of current and/or any previous crop, green area of current and/or any previous crop, yield potential and/or nutrient requirements.

**9.** The agricultural method of any one of the preceding claims, wherein the method comprises the step of sowing seeds based on the recommendation.

**10.** The agricultural method of any one of the preceding claims, wherein the method comprises the step of distributing product based on the recommendation.

**11.** The agricultural method of any one of the preceding claims, further comprising the step of analysing at least one soil sample to determine at least one characteristic for at least one cell.

**12.** The agricultural method of any one of the preceding claims, further comprising the step of determining a nutrient content of the soil at least partly based on the previous crop planted in the field.

**13.** The agricultural method of any one of the preceding claims, further comprising the step of receiving further characteristic information relating to the intended date for carrying out the recommendation and/or the type of seed.

**14.** The agricultural method of any one of the preceding claims, wherein the method comprises rendering the electronic representation of the field and the representative values for the first characteristic and/or the second characteristic.

**15.** The agricultural method of any one of the preceding claims, wherein calculating a recommendation comprises:
obtaining a base value;
obtaining a first modifier for the first characteristic based on the first representative value and a second modifier for the second characteristic based on the second representative value; and
applying the first modifier and the second modifier to the base value for each cell.

**16.** The agricultural method of claim 15, wherein the base value is dependent on the date of carrying out the recommendation and/or the location of the field.

**17.** The agricultural method of either of claims 15 or 16, wherein the first modifier is a first change value and the second modifier is a second change value.

**18.** The agricultural method of any one of claims 15 to 17, wherein the step of applying comprises summing the first change value and the second change value.

**19.** The agricultural method of any claim 18, wherein the step of applying further comprises multiplying the base value by 1 plus the sum of the first change value and the second change value.

**20.** An agricultural method for determining potential yield across a field, the method comprising the steps of:
generating an electronic representation of the field;
receiving characteristic information relating to yield across the field, wherein the characteristic information relates to the yield for at least two different crop cycles (or harvests);
partitioning the electronic representation of the field into a grid of cells;
determining for each cell and for each crop cycle a representative value based on the characteristic information; and
calculating a potential yield for each cell based on the representative values for each of the crop cycles for that cell.

**21.** The agricultural method of claim 20, wherein the recommendation of any one of claims 1 to 19 comprises characteristic information relating to yield across the field, and this characteristic information is used for determining potential yield across a field in claim 20.

**21.** The agricultural method of any one of claims 1 to 19, wherein the potential yield calculated for each cell in claim 20 is characteristic information used to determine a representative value for each cell in claims 1 to 19.

**23.** A computer system comprising:
a processor; and
a memory containing instructions to perform the steps of the method of any one of the preceding claims.

**24.** The computer system of claim 23, wherein the computer system comprises a server comprising the processor and the memory, and the server is configured to communicate with an external device via a network.
